# EUROPEAN PATENT SPECIFICATION

(11) **EP 2 964 141 B1**
(45) Date of publication and mention of the grant of the patent: **09.05.2018**
(21) Application number: 14708031.1
(22) Date of filing: 05.03.2014
(51) Int. Cl.: A61C 17/22, A61C 17/06, A61C 1/08, A61C 13/15, A61C 1/00, A46B 15/00

(54) **DENTAL APPARATUS FOR A DENTAL TREATMENT IN A MOUTH**
ZAHNÄRZTLICHE VORRICHTUNG FÜR DIE ZAHNBEHANDLUNG IN EINEM MUND
APPAREIL DENTAIRE POUR TRAITEMENT DENTAIRE DANS UNE BOUCHE

(30) Priority: 07.03.2013 GB 201304125
(43) Date of publication of application: 13.01.2016
(73) Proprietor: I-Dent Innovations For Dentistry S.A., 1015 Lausanne (CH)
(72) Inventor: BEERSTECHER, Lutz, CH-1015 Lausanne (CH); CHOUSTER, Emil, CH-1015 Lausanne (CH)
(74) Representative: Dilg, Haeusler, Schindelmann Patentanwaltsgesellschaft mbH
(86) International application number: PCT/EP2014/054269
(87) International publication number: WO 2014/135589

(56) References cited:
- WO-A1-2013/021716
- FR-A1- 2 934 148
- US-A- 3 959 883
- US-A1- 2008 060 148
- US-A1- 2010 106 336
- US-A1- 2011 010 876

## Description

### Field of invention

The present invention relates to a dental apparatus for a dental treatment within a mouth.

### Art Background

One of the tasks facing manufacturers of new generations of dental instrumentation, such as cordless dental handpieces, curing lights, scalers etc., is the infection control and the adequate sterilization of the instrument's surface, where a part or the whole surface is placed inside a mouth of a user or a patient. Specifically, the operation control buttons which are located at the surface are prone to contamination. Numerous studies show that a presence of discontinuities on the instrument's surface in the form of grooves, sharp steps, rough surfaces and the like may create a shelters for biofilm grow, therefore even steam autoclaving cannot guaranty a total killing of contaminating bacteria. Common control means, such as buttons, sliders and touch switches form such discontinuities on the instrument's surface.

The use of protective disposable sleeves which is a common form of infection control for passive parts of dental office equipment (handles, grips, etc.) in most cases is difficult because such sleeves would interfere with moving work parts of an instrument or sufficiently reduce expected performance level of instruments having an optical output.

US 2011/0010876 discloses an electrical toothbrush including drive means, a three-axis acceleration sensor and a brush, wherein the drive means switches an operation mode of the brush in accordance with a parameter estimated on the basis of data provided by the acceleration sensor.

### Summary of the Invention

It may be an objective to provide a dental apparatus which comprises an intuitive operation and a proper infection control.

This objective may be solved by a dental apparatus for a dental treatment within a mouth. According to a first aspect of the present invention a dental apparatus for a dental treatment within a mouth, e.g. of a patient or of a user of the dental apparatus, is presented. The dental apparatus comprises a gripping body comprising an outer surface which is able to be gripped by a user. The dental apparatus further comprises a functional device which is adapted for a treatment into the mouth and a sensor which is arranged within the gripping body. The sensor is adapted for measuring a control signal generated by the user, wherein the sensor is formed without causing unevenness in the outer surface of the gripping body. A control unit is coupled to the sensor for receiving the control signal. The control unit is further coupled to the functional device for controlling the functional device on the basis of the control signal.

Specifically, according to a further aspect of the present invention a dental apparatus for a dental treatment within a mouth, e.g. of a patient or of a user of the dental apparatus, is presented. The dental apparatus comprises a gripping body to be gripped by a user, a functional device which is adapted for a treatment into the mouth and an acceleration sensor which is arranged within the gripping body. The acceleration sensor is adapted for measuring at least one component of an acceleration of the gripping body. The dental apparatus further comprises a control unit which is arranged within the gripping body, wherein the control unit is coupled to the acceleration sensor for receiving an acceleration signal which is indicative of the at least one component of the acceleration of the gripping body. The control unit is further coupled to the functional device for controlling the functional device on the basis of the acceleration signal. Disclosed is further a method for operating a dental apparatus for a dental treatment within a mouth is presented. According to the method, at least one component of an acceleration of a gripping body of the dental apparatus is measured by an acceleration sensor which is arranged within the gripping body is measured. An acceleration signal of the acceleration sensor is received by a control unit, which is arranged within the gripping body. The acceleration signal is indicative of the at least one component of the acceleration of the gripping body. A functional device is controlled on the basis of the acceleration signal by the control unit, wherein the functional device is adapted for a treatment into the mouth.

The gripping body may comprise an inner volume into which the functional elements, such as the sensor, e.g. the acceleration sensor, and the control unit, are arranged. In other words, the gripping body forms a housing for the functional units. In particular, the gripping body hermetically isolates the functional elements, such as the acceleration sensor and the control unit, which are located within the gripping body from the environment. The gripping body may be free of any sliders or buttons by using the sensors according to the present invention. Hence, the gripping body comprises a surface which is free of any discontinuities, such as grooves, sharp edges or surfaces, which would be caused by sliders or buttons. The gripping body may form a hand holder comprising a gripping section. In operation, the operator of the dental apparatus holds the gripping body in his hand for operating and controlling the dental apparatus.

The functional device may comprise a section which is located within the gripping body and a section which protrudes from the gripping body. Specifically, the functional device comprises an activating (driving) component arranged within the gripping body or spaced apart from the gripping body and a treating component which is adapted for a treatment into the mouth. The activating component is coupled to the treating component for activating and driving the treating component. The gripping body comprises an interface which guides the treating component from the inside of the gripping body out of the gripping body. The interface is hermetically sealed such that no fluid may pass the interface and enter the inside of the gripping body.

The activating component is for example an electrical motor, a light diode, a hydraulic or pneumatic pumping unit, a pneumatic motor and/or a pneumatic turbine.

The treating component may be for example a light guide, a dental drill, an oral irrigator tube, a suction tube, an electrochirurgical device, an ultrasonic dental calculus remover and/or a laser device.

Hence, for example the dental apparatus may be a lighting device which illuminates the inside of a mouth. Hence, the activating component may be for example a light diode and the treating component may be for example a light guide which guides the light from the light diode to the output section of the light guide. The light diode may also generate for example a so-called blue light for hardening plastic materials which may be used as artificial dentition, for example.

Alternatively, the activating component may be an electric motor which drives a dental drill, a dental brush or an electrochirurgical device functioning as treating component, for example.

The acceleration sensor according to an exemplary embodiment of the present invention is arranged within the gripping body and is hence hermetically isolated from the environment of the gripping body. The acceleration sensor measures the acceleration and hence a change of velocity of the gripping body. Furthermore, the acceleration sensor may measure an orientation of the gripping body. The dental apparatus may also comprise in an exemplary embodiment two or more acceleration sensors. The acceleration sensor may comprise piezoelectric, piezoresistive and/or capacitive components which convert the mechanical acceleration motion into the electrical acceleration signal. Piezoelectric accelerometer sensors may rely on piezoceramic or single crystals such as quartz or tourmaline. The acceleration sensor may be small in size and may form a micro-electro-mechanical system (MEMS).

In particular, according to an exemplary embodiment of the present invention, the acceleration sensor is adapted for measuring at least one component of an acceleration of the gripping body. The component is e.g. a spatial direction, such that an acceleration in at least one spatial direction, in two spatial directions and/or in three spatial directions is measurable. Additionally, for example on the basis of the above measured accelerations along the spatial directions, the acceleration sensor is in a further exemplary embodiment adapted for measuring a rotational movement and hence a pivoting of the gripping body.

Hence, the acceleration sensor measures a vibration, a strike, a rotation and/or an orientation of the gripping body and generates a respective acceleration signal.

The sensor, the control unit and further functional units, such as the data storage unit and a signal processing unit, may be located internally of the gripping body. The internally located sensor reacts on the external stimulus based on acceleration, such as stress, vibration and/or strike. Implementing such a control allows instrument's surface, i.e. the gripping body's surface, to be continuous and homogeneous such that a simple and complete cleaning and sterilization procedure is possible.

The sensor according to the present invention is adapted for measuring the control signal generated by the user without causing unevenness in the outer surface of the gripping body. Unevenness in the outer surface means discontinuities, such as grooves, sharp edges or gaps. Unevenness in the outer surface may be formed by elements of conventional sensors and conventional switches, such as buttons or sliders, which are attached onto the outer surface. The sensors according to the present invention are sensor types which are free of any buttons, such as press buttons. The sensors according to the present invention are free of any elements which have to be attached onto the outer surface of the gripping body or which have to be connected to elements located at the outer surface. Hence, the sensors according to the present invention are contact free sensors which do not need a physical contact with the user at the outer surface of the gripping body.

The sensor according to the present invention may be an acceleration sensor as described above. Furthermore, the sensor according to the present invention may be a bending sensor or a capacitive sensor. The acceleration sensor measures at least one component of an acceleration of the gripping body which is indicative of the control signal. The bending sensor measures a deformation, e.g. a bending or a stress, of the gripping body which may be caused by the user. The capacitive sensor measures a change in the electrical field, which is caused if the user types or hits onto the outer surface of the gripping body.

The sensor, e.g. the acceleration sensor, and the necessary electronic means for analyzing and processing respective signals, for filtering noise, for signal amplifying and also for creating control commands for regulating or choosing intended operating functions may be placed inside the gripping body either in sealed form allowing autoclaving and disinfection or in detachable form allowing to detach the control module before an autoclaving and disinfection is accomplished. Hence, the gripping body itself becomes an infection barrier protecting the acceleration sensor module from contamination. Combination of different sensors, such as acceleration, bending, capacitive and/or temperature sensors, enables control of different operational modes of the dental apparatus. Additionally a tonal signal or synthesized voice commands may be used for recognition of the activated operational commands.

The control unit receives the measured control (e.g. the acceleration) signal from the sensor. The control unit is further coupled and connected, e.g. by electrical wires, to the functional device for controlling the functional device on the basis of the control signal. For processing the control signal the control unit may comprise a central processing unit (CPU). The control unit may be arranged within the gripping body or may be located externally with respect to the gripping body, wherein the control unit is connected wireless or by wire with the functional device and with the acceleration sensor.

For example, if the sensor is an acceleration sensor, the user of the dental apparatus types for example with its finger tips on a surface of the gripping body such that the gripping body experiences an acceleration along a spatial direction. This acceleration is measured by the acceleration sensor such that the functional device may be controlled on the basis of the measured acceleration signal. Hence, the user of the dental apparatus may for example turn off or turn on the functional device by typing with its finger the surface of the gripping body.

By the approach of the present invention, additional buttons or sliders are not necessary for operating the functional device. The operation of the functional device may be (exclusively) controlled by control signals, e.g. by accelerations of the gripping body of the dental apparatus. By using e.g. acceleration sensors which measure an acceleration along two or three spatial directions and/or by additionally measuring a rotational movement of the gripping body, a variety of different control signals may be generated on the basis of predetermined accelerations and motion sequences of the gripping body.

For example, if the user turns the gripping body in a first rotational movement direction, a light of a lightning device which is used as functional device may be turned brighter, wherein if the user turns the gripping body in an opposed second rotational movement direction, the light of the functional device may be turned darker.

The above-described control and operating commands based on the respective acceleration signal are only exemplary. Besides that, a plurality of further commands may be programmable for controlling the functional device on the basis of predefined accelerations and respective acceleration signals.

Hence, because no further operating buttons or sliders are necessary, all necessary operating units, such as the control unit and parts of the functional device, such as the activation unit, may be located inside the gripping body and hermetically sealed from the environment of the gripping body. In other words, no control means of the dental apparatus have to be attached onto a surface of the gripping body. Hence, a proper infection control of the dental apparatus is achieved, because no discontinuities, such as grooves, sharp edges or surfaces which would be created by sliders or buttons, are formed in the outer surface of the gripping body.

According to a further exemplary embodiment, the dental apparatus comprises a data storage unit which may be arranged within the gripping body. In the data storage unit, a predefined motion sequence of the gripping body is stored. The predefined motion sequence is indicative of a control command for the functional device. The control unit is adapted for determining a measured motion sequence of the gripping body on the basis of the acceleration signal. The control unit is coupled to the data storage such that the control unit is adapted for comparing the measured motion sequence with the predefined motion sequence and for subsequently receiving the respective control command indicative of the predefined motion sequence.

The measured motion sequence may be indicative for example of several tipping hits with the operators finger tips onto the basic bodies surface (such as a "double click"), of a sliding along a surface of the gripping body or of a rotational movement (pivoting) of the gripping body.

The control command which is stored in the data storage unit is indicative to a variety of predefined motion sequences. For example, a predefined motion sequence may be a "double click", where the user hits two times in a short time period the surface of the gripping body. The motion sequence "double click" may be indicative of the control command "switching on the functional device". Hence, the control unit measures the measured motion sequence "double click" and compares the measured motion sequence with the predefined motion sequence stored in the data storage unit. Hence, if the measured motion sequence complies with a predefined motion sequence, the control command which is indicative to the predefined motion sequence is used for controlling the functional device, respectively.

Hence, a plurality of different control commands may be stored in the data storage unit, wherein for each control command a predefined motion sequence is associated. Hence, the user of the dental apparatus may control the dental apparatus by applying a variety of different accelerations, such as the motion sequence "double click" or predefined rotations of the gripping body for controlling a plurality of different functions of the functional device.

The data storage unit may be for example a disc storage unit, a flash memory card, a semiconductor volatile or non-volatile random access memory, etc.

According to a further exemplary embodiment, the dental apparatus further comprises a temperature sensor which is arranged within the gripping body.

The temperature sensor is adapted for measuring a temperature on a surface of the gripping body. The control unit is coupled to the temperature sensor for receiving a temperature signal which is indicative of the temperature of the surface of the gripping body. The control unit is further coupled to the functional device for controlling the functional device on the basis of the temperature signal.

Hence, a further measuring parameter, namely the temperature on the surface of the gripping body, may be used for additionally controlling the functional device. For example, if the user wraps the gripping body with his hand, the temperature of the surface of the gripping body increases. The respective temperature change is measured by the temperature sensor and a respective temperature signal is sent to the control unit. Next, if the user conducts a predefined movement of the gripping body, such as double clicking the surface of the gripping body, the control unit switches on the functional device. If the gripping body would fall to the ground and a "double click" acceleration would be applied accidentally, the control unit would not turn on the functional device, because the respective temperature signal which is indicative of a hand holding the gripping body fails. Hence, the risk of an accidentally generated operation control by the control unit is reduced because the control unit receives besides the acceleration signal additionally the temperature signal for controlling the functional device.

According to a further exemplary embodiment, the dental apparatus further comprises an energy supply unit which is arranged to the gripping body. The energy supply unit is connected to the acceleration sensor, to the control unit and/or to the functional device for supplying energy.

The energy supply unit may be for example a battery, in particular a rechargeable battery. For example, the energy supply unit may be a lithium ion battery. The energy supply unit is specifically arranged within the gripping body and hence hermetically isolated from the surroundings of the gripping body.

According to a further exemplary embodiment, the energy supply unit is detachably coupled to the gripping body. Hence, the energy supply unit may be exchanged in a fast manner if the used energy supply unit is empty. An empty energy supply unit may be quickly exchanged by a fully charged energy supply unit, for example. The energy supply unit may be detachably coupled to the gripping body.

According to a further exemplary embodiment, the gripping body comprises an electrical connector for attaching and connecting an electric cable. The electrical connector is connected to the acceleration sensor, to the control unit and/or to the functional device. The gripping body comprises electrical feed-throughs through which the electrical connector may be guided for connecting the ultimate consumers with the electrical cable. The electrical feed-throughs may be hermetically sealed, e.g. by resin or by rubber sealings. Hence, the dental apparatus may be connected to a power grid, for example.

The dental apparatus may be designed for a use with the above-described energy supply unit and additionally by plugging an electric cable to the electric connector. Hence, the dental apparatus may be supplied by energy either by the energy supply unit or by the power grid. Hence, a flexible area of application for the dental apparatus is provided.

According to a further exemplary embodiment, the gripping body comprises a fluid connector for attaching a fluid cable, wherein the fluid connector is connected to the functional device for guiding fluid between the fluid connector and the functional device.

For example, if the functional device is an oral irrigator or a dental sucking device for sucking body fluid, such as spittle, out of the mouth, the respective fluid is guidable through the fluid connector to the functional device. The fluid connector may be for example an external tube which is guided along the surface of the gripping body and which is connected to the functional device. Alternatively, the gripping body may comprise fluidical feed-throughs through which the fluid connector, such as an internal tube, may be guided inside the gripping body, wherein the fluid connector is coupled to the functional device at an inner section of the gripping body. Hence, the surface of the gripping body may be kept homogeneous and no discontinuities, such as an external attached tube, are generated. The respective fluid is guided by the fluid connector through the gripping body from an input section of the gripping body, where the fluidic feed-throughs are formed, to the respective functional device, wherein the coupling section of the functional device with the fluid connector is arranged inside the gripping body.

Summarizing, by the present invention, a dental apparatus comprises a gripping body with a sensor and without any buttons, switches or sliders for controlling purposes. The dental apparatus comprises at least one e.g. acceleration sensor which measures the movement, the vibration and the orientation of the dental apparatus. Based on these measured accelerations and orientations of the dental apparatus, respective functions of the dental apparatus may be activated, deactivated or adjusted. The dental apparatus stores several control commands for the functional device of the dental apparatus which may be activated by respective motion sequences of the dental apparatus which are indicative of the respective control commands. Hence, a predefined function of the dental apparatus may be activated if the operator performs a predefined motion of the gripping body. Additionally, a predefined function may be deactivated or may be prevented from activation if the dental apparatus is not correctly positioned, for example.

The above-described functions of the dental apparatus is possible without needing and using any switches or buttons which are attached to the surface of the gripping body of the dental apparatus. Hence, because such buttons are complicated to clean, the dental apparatus according to the present invention improves the hygiene and in particular the oral hygiene of the mouth.

For example, an acceleration sensor which is integrated in the gripping body of the dental apparatus measures an acceleration along a direction which is perpendicular to a center axis of an elongated gripping body which is used as a holder section of the dental apparatus. Hence, a simple typing with a fingertip onto the surface of the gripping body activates a predefined function. The acceleration sensor may determine an acceleration which is indicative of a simple typing, a double typing (double click) or a multiple typing with the fingertip onto a surface of the gripping body. Hence, by activating a function with a multiple typing, an accidental activation of certain functions due to e.g. laying the gripping body onto a table may be prevented.

The above-described dental apparatus is beneficial in particular gripping bodies which are coupled by e.g. supply tubes and supply cables to a patients unit. According to an exemplary embodiment of the present invention, the control unit is arranged at the patients unit and is thus located spaced apart from the gripping body. Hence, the gripping body merely comprises the sensor and the functional device. The control unit and e.g. the data storage unit in the patients unit are coupled to the sensor and/or to the functional device by wire or wireless for transmitting the control signals and the control commands, respectively.

Alternatively, the activating component of the functional device is arranged within the patients unit and is hence also spaced apart from the treating component of the functional device which is arranged at the gripping body. Hence, the sensor measures the control signal, sends the signal to the control unit in the patients unit and the control unit controls respectively the activating unit. The activating unit, such as a fluid pump, pumps subsequently the fluid to the treating component.

Hence, because the control unit and e.g. the activating unit are not attached to the gripping unit, the gripping unit may be design smaller and lighter.

The patients unit may further comprise additional functional devices which may be controlled by foot pedals, for example.

According to conventional approaches, such dental treatment systems which comprise a central control unit are not operable explicitly by e.g. foot switches, but needs in particular conventional switches at the handheld unit.

According to a further exemplary embodiment, the above-described functional units, such as the acceleration sensor, the control unit, the data storage unit and/or the temperature sensor may be circuitry-wise combined integrally such that only a few electrical components have to be installed into the gripping body.

According to a further exemplary embodiment, the gripping body hermetically seals and encapsulates the control unit comprising the evaluation processing unit, i.e. the central processing unit (CPU), and the parts of the functional device as well as the sensor. Hence, a cleaning of the gripping body by using autoclaving and steam pressure sterilization in order to provide a proper hygienic condition may be applied.

It may also possible to divide the gripping body in a first section which comprises the acceleration sensor and the functional device on the one side and in a second section which comprises the control unit and the electrical connections. Hence, it is possible to sterilize only the first section of the gripping body which comprises the treating unit, such that the second section of the gripping body is not exposed to an autoclaving and disinfection procedure, for example. The first section and the second section of the gripping body may be coupled by a plug connection or by a screw connection, for example.

Specifically, in a further exemplary embodiment, the gripping body comprises an outer housing and an inner supporting body. The outer housing is mountable to the supporting body such that the supporting body is hermetically sealed from the environment. The supporting body comprises the functional components of the dental apparatus, such as the functional device, the sensor, the control unit and/or the data storage unit, for example. Hence, the supporting body may be separated from the housing unit of the gripping body and only the housing unit of the gripping body is necessary to sterilize i.e. by an autoclaving procedure. Hence, the risk of damaging the functional components, such as the acceleration sensor, the control unit or the data storage unit by a sterilization procedure may be reduced.

According to a further exemplary embodiment, the functional device, and in particular the treatment device of the functional device, comprises a distance sensor for measuring a distance signal between the functional device (e.g. the treatment device) and a section of the mouth.

By measuring the distance between the functional device (in particular the treatment unit of the functional device) and the mouth or the inner mouth section of the mouth, it may be determined if the treatment unit is already located inside the mouth and at which location inside the mouth the treatment unit is located.

According to a further exemplary embodiment, the control unit is coupled to the functional device for controlling the functional device on the basis of the control signal and the distance signal.

Hence, the functional device is controlled on the basis of the movement (acceleration) and i.e. the motion sequence of the gripping body and additionally the location and the distance, respectively, of the functional device (i.e. the treatment unit) to the mouth section.

If e.g. the distance sensor measures a contact (i.e. zero distance) with the treatment unit and the inner mouth section, the control unit may generate the control signal for switching on or off the functional device. In combination with the measured control signal from the acceleration sensor, the functional device may decide to switch on or off the functional device. Hence, the error rate caused by indistinct measured control signal may be reduced.

Furthermore, the gripping body may comprise a vibrating unit which may be activated when the functional device, i.e. the treatment unit, contacts the mouth section inside the mouth. Hence, the user of the dental apparatus recognizes immediately a desired or undesired contact with the mouth section if the gripping body vibrates by the vibrating device.

According to a further exemplary embodiment, the distance sensor is a capacitive sensor. The capacitive sensor measures a change in the electrical field, which is caused if the user types or hits onto the outer surface of the gripping body. In particular, the capacitive sensor may measure a contact of the functional device, e.g. the treatment unit, with an element, i.e. the section of the mouth.

According to a further exemplary embodiment, the distance sensor is an optical sensor which measures reflecting light which is reflected from the section of the mouth.

By measuring the reflected light, an exact distance of the functional device, i.e. the treatment unit, and the mouth section may be determined.

According to a further exemplary embodiment, the functional device further comprises an illuminating element for illuminating the section of the mouth. The illuminating element may be for example a (dental) curing light used for polymerization of light cure resin based composites. Hence, the illuminating element may be the treatment unit as described above. It may be used on several different dental materials that are curable by light. The light used falls e.g. under the visible blue light spectrum. This light is delivered over a range of wavelengths and varies for each type of device. There are four basic types of dental curing lights: the Tungsten halogen and light-emitting diode (LED), plasma arc curing (PAC), and laser. However, the illuminating element may also be a regular lamp, which directs visible light to a desired section inside the mouth and illuminates the mouth section of interest. Hence, by additional illuminating the mouth section by the illuminating element, the optical sensor may detect the distance to the mouth section more exactly.

In an exemplary embodiments, the optical sensor and/or the illuminating element is arranged within the gripping body. A light guide of the treating component is coupled to the optical sensor and/or the illuminating element, respectively, such that the respective light waves (e.g. the illuminating light or the reflected light) may be guided between a free end of the light guide, which is arrangeable within a mouth, and an internal end of the light guide inside the gripping body. Hence, by one and the same light guide, light from the illuminating element may be guided into the mouth and light, which is reflected from elements within the mouth may be guided from the light guide to the respective optical sensor.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a dental apparatus according to an exemplary embodiment of the present invention, wherein the dental apparatus comprises an illuminator unit;
Fig.2 shows a schematical view of a dental apparatus according to an exemplary embodiment of the present invention, wherein the dental apparatus comprises a dental drill;
Fig.3 shows a schematical view of a dental apparatus according to an exemplary embodiment of the present invention, wherein the control unit is located within a patients unit; and
Fig.4 shows a schematical view of a dental apparatus according to an exemplary embodiment of the present invention, wherein the control unit and the activating unit are located within a patients unit.

### Detailed Description

The illustrations in the drawings are schematical. It is noted that in different figures, similar or identical elements are provided with the same reference signs.

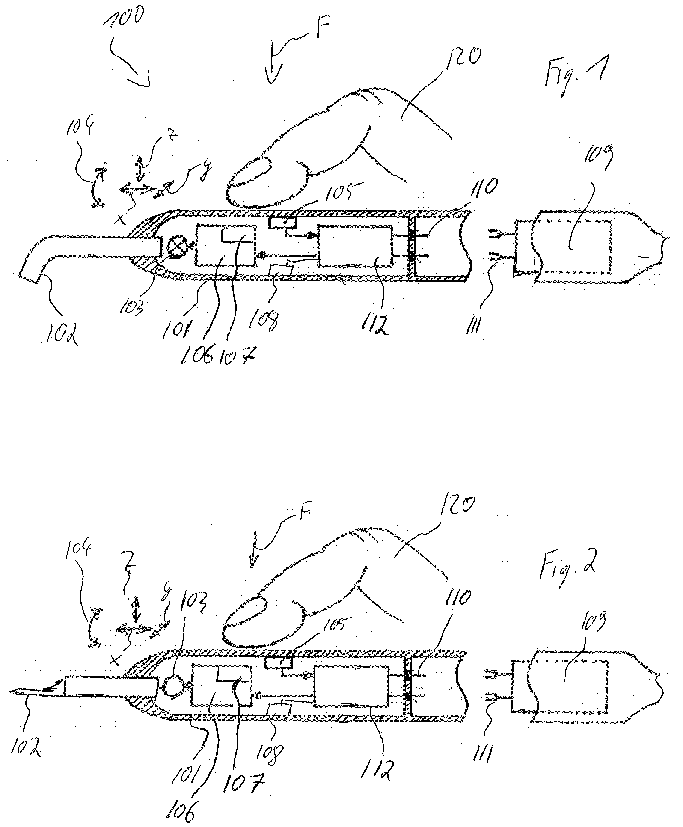

Fig. 1 shows an exemplary embodiment of a dental apparatus 100 according to an exemplary embodiment of the present invention.

The dental apparatus 100 comprises a gripping body 101 and a functional device which is adapted for treatment into the mouth. Furthermore, the dental apparatus 100 comprises a sensor, such as an acceleration sensor 105, which is arranged within the gripping body 101. The acceleration sensor 105 is adapted for measuring an acceleration of the gripping body in at least one spatial direction x, y, z. Alternatively, the sensor may be a bending sensor or a capacitive sensor.

Furthermore, the dental apparatus 100 comprises a control unit 106, which is arranged within the gripping body 101. The control unit 106 is coupled to the acceleration sensor 105 for receiving an acceleration signal which is indicative of the acceleration of the gripping body 101 in the at least one spatial direction x, y, z. The control unit 106 is further coupled to the functional device for controlling the functional device on the basis of the acceleration signal.

The spatial directions x, y, z shown in Fig. 1 are perpendicular to each other. Furthermore, Fig. 1 indicates also a rotational movement 104 of the gripping body 101, wherein in an exemplary embodiment, the acceleration sensor 105 is adapted for measuring the rotational movement 104.

The gripping body 101 may be a gripping unit which may be grabbed by a user of the dental apparatus 100. The gripping body 101 forms a housing for the functional elements of the dental apparatus 100.

The functional device comprises an activating component 103 which is arranged within the gripping body and a treating component 102 which is adapted for treatment into the mouth. The activating component 103 is coupled to the treating component 102 for activating and for driving the treating component 102.

In the exemplary embodiment shown in Fig. 1, the activating component 103 may be for example a light diode (LED) wherein the treating component 102 may be for example a light guide which guides the light generated by the light diode into the mouth.

The functional device as shown in Fig. 1 may be used for illuminating the mouth with e.g. white light. For raying a patient's teeth, the light diode may generate a higher light intensity. If the user types with an operating force F with its fingertip onto the surface of the gripping body 101, a measurable acceleration of the gripping body 101 is generated. Hence, the intensity of the generated light by the light diode may be switched for example by typing with a finger typing onto the gripping body 101, wherein the thereby generated acceleration of the gripping body 101 is measured by the acceleration sensor 105 and the control unit 106 controls respectively the light diode functioning as the activation component 103.

Additionally, the light diode functioning as activating component 103 may be formed for generating blue light which may be used for polymerizing and hardening plastic and synthetic materials. A typing with the fingertip on the gripping body 101 may activate for example the blue light generation for a predefined time period in order to provide a desired hardening quality of the plastic material.

Additionally, the gripping body 101 houses a data storage unit 107. The data storage unit 107 stores predefined motion sequences of the gripping body 101, wherein the predefined motion sequences are indicative to respective control commands for the functional device. The control unit 106 determines a measured motion sequence of the gripping body 101 on the basis of the acceleration signal. The control unit 106 receives the data, i.e. the respective control commands and the respective predefined motion sequences, and compares the measured motion sequence with the predefined motion sequences. If a measured motion sequence matches with a predefined motion sequence, the control unit 106 uses the respective control command indicative of the predefined motion sequence for controlling the functional device respectively.

The predefined motion sequences may define predefined motion codes by which respective control commands. The predefined motion sequences may reproduce and simulate for example a single typing of a fingertip onto the gripping body 101, a double typing or a multiple typing with the fingertip onto the surface of the gripping body 101. Additionally, also a pivoting of the gripping body 101 in a predefined pivoting direction may activate predefined control commands.

Furthermore, additionally functional units, such as a signal processing unit 112 may be installed inside the gripping body 101 in order to improve the functionality of the dental apparatus 100.

The acceleration sensor 105 is mounted to the gripping body 101 e.g. by gluing the acceleration sensor 105 to an inner surface of the gripping body 101. Between the acceleration sensor 105 and the control unit 106, a signal amplifier may be interposed in order to improve the acceleration signals and to reduce noises, for example.

The acceleration signal is processed in the control unit 106. Specifically, the control unit 106 analyzes the acceleration signal in such a way that the accelerations within a certain time period, within a certain frequency range and along certain spatial directions x, y, z may be determined. Hence, a measured signal sequence is determined by the control unit 106, wherein the signal sequence describes a measured motion sequence. This measured motion sequence is compared with stored predefined motion sequences in the data storage unit 107. If a sufficient compliance with the measured motion sequence and the predefined motion sequence exists, a control command, which is indicative to the predefined motion sequence, is executed by the control unit 106.

Furthermore, a temperature sensor 108 may be installed inside the gripping body 101, wherein the temperature sensor 108 is adapted for measuring a temperature on a surface of the gripping body 101. The control unit 106 is coupled to the temperature sensor 108 for receiving a temperature signal which is indicative of the temperature of the surface of the gripping body 101. The control unit 106 may control the functional device on the basis of the temperature signal. Hence, the temperature sensor 108 determines, if the operator holds the gripping body 101 in his hands for operating purposes and measures on the other side if the gripping body 101 is not held in an operator's hand. Hence, it is possible to determine if an acceleration of the gripping body 101 is generated intentionally by an operator or unintentionally by e.g. hitting the dental apparatus 100 unintentionally onto a table. Hence, by the temperature sensor 108, a control mechanism is provided for preventing an unintentionally activation of the functional device.

Furthermore, the dental apparatus 100 may comprise an energy supply unit 109, which may be integrally installed inside the gripping body 101 or exchangeably coupled to the gripping body 101 as shown in Fig. 1. The energy supply unit 109 comprises a further electrical connector 111 which is coupled to an electric connector 110 of the gripping body 101. The electrical connector 110 may be guided through hermetically sealed feed-throughs which are installed in the gripping body 101.

Alternatively, an electrical cable which is coupled to a power grid may be exchangeably coupled to the electrical connector 110.

Fig. 2 shows a dental apparatus 100 which comprises similar features as the dental apparatus 100 shown in Fig. 1, wherein the treating component 102 and the activating component 103 of the functional device differs from the exemplary embodiment shown in Fig. 1.

In Fig. 2, the treating component 102 is for example a dental drill or a dental brush (tooth brush) which comprises at its free end exchangeable dental drill tools. The activation component 103 may be for example an electric motor for vibrating the treating component 102, for example.

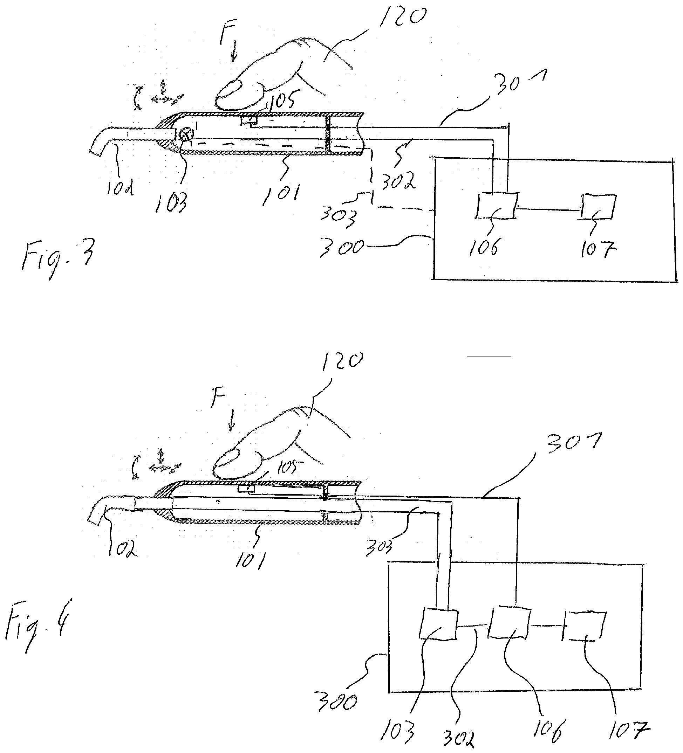

**Fig. 3** shows a dental apparatus 100 according to a further exemplary embodiment of the present invention, wherein the control unit 106 is located into a patients unit 300. The patients unit 300 is a central unit to which a variety of different conventional functional devices are installed and coupled. The patients unit 300 may comprise e.g. foot levers for controlling the conventional functional devices.

Additionally, the control unit 106 and e.g. the data storage unit 107 are installed into the patients unit 300. The control unit 106 is connected to the sensor, e.g. the acceleration sensor 105, by a data line 301 for transmitting the control signal from the acceleration sensor 105. The data line 301 may be formed wire-bounded or wireless. The control unit 106 is further connected to the activating component 103 (e.g. an LED) of the functional device by a further data line 302 for transmitting the control command from the control unit 106. The further data line 302 may be formed wire-bounded or wireless. Furthermore, the activating component 103 may be connected with the patients unit 300 by a tube 303 for transferring fluid between the patients unit 300 and the activating component 103.

**Fig.4** shows a schematical view of a dental apparatus 100, wherein the control unit 106, the activating component 103 and the data storage unit 107 are located into the patients unit 300.

The control unit 106 is connected to the sensor, e.g. the acceleration sensor 105, by the data line 301 for transmitting the control signal from the acceleration sensor 105. The data line 301 may be formed wire-bounded or wireless. The control unit 106 is further connected to the activating component 103 which is installed into the patients unit 300 by the further data line 302 for transmitting the control command from the control unit 106.

The activating component 103 may be connected with the treating component 102 which is arranged at the gripping body 101 by a tube 303, a data line or a light guide for transferring e.g. fluid, data or light between the activating component 103 and treating component 102. For example, the activating unit 103 may be a heavy pumping unit and the treating component 102 may be a suction tube for sucking off body fluid from a mouth of a patient. Hence, the gripping body 101 only comprises the sensor and the treating component 102 and is therefore light and easy to handle.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of Reference Signs:

- 100: dental apparatus
- 101: gripping body
- 102: treating component
- 103: activating component
- 104: rotational movement
- 105: acceleration sensor
- 106: control unit
- 107: data storage unit
- 108: temperature sensor
- 109: energy supply unit
- 110: electrical connector
- 111: further electrical connector
- 112: signal processing unit

- 300: patients unit
- 301: data line for control signal
- 302: further data line for control command
- 303: tube

- x, y, z: spatial directions
- F: operating force

## Claims

1. Dental apparatus (100) for a dental treatment within a mouth, the dental apparatus (100) comprising
a gripping body (101) comprising an outer surface which is able to be gripped by a user,
a functional device which is adapted for a treatment within the mouth,
an acceleration sensor (105) which is arranged within the gripping body (101),
wherein the acceleration sensor (105) is adapted for measuring a control signal generated by the user,
wherein the acceleration sensor (105) is adapted for measuring the control signal which is indicative of at least one component of an acceleration of the gripping body (101),
a control unit (106),
wherein the control unit (106) is coupled to the acceleration sensor (105) for receiving the control signal, and
wherein the control unit (106) is further coupled to the functional device for controlling the functional device on the basis of the control signal, and
a data storage unit (107) which is arranged within the gripping body (101), wherein in the data storage unit (107) a predefined motion sequence of the gripping body (101) is stored,
wherein the predefined motion sequence is indicative of a control command for the functional device, and
wherein the control unit (106) is adapted for determining a measured motion sequence of the gripping body (101) on the basis of the control signal,
wherein the control unit (106) is coupled to the data storage unit (107) such that the control unit (106) is adapted for comparing the measured motion sequence with the predefined motion sequence and for subsequently transmitting the respective control command indicative of the predefined motion sequence.

2. Dental apparatus (100) according to claim 1,
wherein the acceleration sensor (105)is formed without causing unevenness in the outer surface of the gripping body (101).

3. Dental apparatus (100) according to claim 1 or 2,
wherein the acceleration sensor (105) is adapted for measuring the control signal which is indicative of at least two and/or at least three components of acceleration of the gripping body (101).

4. Dental apparatus (100) according to one of the claims 1 to 3,
wherein the acceleration sensor (105) is adapted for measuring a rotational movement (104) of the gripping body (101).

5. Dental apparatus (100) according to one of the claims 1 to 4, further comprising
a temperature sensor (108) which is arranged within the gripping body (101),
wherein the temperature sensor (108) is adapted for measuring a temperature on a surface of the gripping body (101),
wherein the control unit (106) is coupled to the temperature sensor (108) for receiving a temperature signal which is indicative of the temperature of the surface of the gripping body (101), and
wherein the control unit (106) is further coupled to the functional device for controlling the functional device on the basis of the temperature signal.

6. Dental apparatus (100) according to one of the claims 1 to 5,
wherein the functional device comprises an activating component (103) arranged within the gripping body (101) and a treating component (102) which is adapted for a treatment into the patient's mouth,
wherein the activating component (103) is coupled to the treating component (102) for activating the treating component (102).

7. Dental apparatus (100) according to one of the claims 1 to 6, further comprising
an energy supply unit (109) which is arranged to the gripping body (101), wherein the energy supply unit (109) is connected to the sensor, to the control unit (106) and/or to the functional device for supplying energy.

8. Dental apparatus (100) according to claim 7,
wherein the energy supply unit (109) is detachably coupled to the gripping body (101).

9. Dental apparatus (100) according to one of the claims 1 to 8,
wherein the gripping body (101) comprises an electrical connector (110) for attaching an electric cable, and
wherein the electrical connector (110) is connected to the sensor (105), to the control unit (106) and/or to the functional device for supplying energy.

10. Dental apparatus (100) according to one of the claims 1 to 9,
wherein the gripping body (101) comprises a fluid connector for attaching a fluid cable, and
wherein the fluid connector is connected to the functional device for guiding fluid between the fluid connector and the functional device.

11. Dental apparatus (100) according to one of the claims 1 to 10,
wherein the functional device comprises a distance sensor for measuring a distance signal between the functional device and a section of the mouth.

12. Dental apparatus (100) according to claim 11,
wherein the control unit (106) is coupled to the functional device for controlling the functional device on the basis of the control signal and the distance signal.

13. Dental apparatus (100) according to claim 11 or 12,
wherein the distance sensor is a capacitive sensor.

14. Dental apparatus (100) according to claim 11 or 12,
wherein the distance sensor is an optical sensor which measures reflecting light which is reflected from the section of the mouth.

15. Dental apparatus (100) according to one of the claims 1 to 14,
wherein the functional device further comprises an illuminating element for illuminating the section of the mouth.

## Patentansprüche

1. Ein Dentalapparat (100) für eine dentale Behandlung innerhalb eines Mundes, wobei der Dentalapparat (100) aufweist
einen Haltekörper (101) aufweisend eine äußere Oberfläche, welche möglich ist von einem Benutzer gehalten zu werden,
eine funktionale Vorrichtung, welche geeignet ist für eine Behandlung innerhalb des Mundes,
einen Beschleunigungssensor (105), welcher angeordnet ist innerhalb des Haltekörpers (101),
wobei der Beschleunigungssensor (105) geeignet ist zum Messen eines Steuersignals, welches von dem Benutzer generiert wird,
wobei der Beschleunigungssensor (105) geeignet ist zum Messen des Steuersignals, welches indikativ ist für zumindest eine Komponente von einer Beschleunigung von dem Haltekörper (101),
eine Steuereinheit (106),
wobei die Steuereinheit (106) gekoppelt ist zu dem Beschleunigungssensor (105) zum Empfangen des Steuersignals, und
wobei die Steuereinheit (106) ferner gekoppelt ist zu der funktionalen Vorrichtung zum Steuern der funktionalen Vorrichtung auf der Basis von dem Steuersignal, und
eine Daten Speichereinheit (107), welche angeordnet ist innerhalb des Haltekörpers (101),
wobei in der Daten Speichereinheit (107) eine vordefinierte Bewegungssequenz von dem Haltekörper (101) gespeichert ist,
wobei die vordefinierte Bewegungssequenz indikativ ist für ein Steuerkommando für die funktionale Vorrichtung, und
wobei die Steuereinheit (106) geeignet ist zum Bestimmen einer gemessenen Bewegungssequenz von dem Haltekörper (101) auf der Basis von dem Steuersignal,
wobei die Steuereinheit (106) gekoppelt ist zu der Daten Speichereinheit (107), sodass die Steuereinheit (106) geeignet ist zum Vergleichen der gemessenen Bewegungssequenz mit der vordefinierten Bewegungssequenz und zum anschließenden Übertragen des entsprechenden Steuerkommandos, welches indikativ ist von der vordefinierten Bewegungssequenz.

2. Der Dentalapparat (100) gemäß Anspruch 1,
wobei der Beschleunigungssensor (105) ausgebildet ist ohne Unebenheiten in der äußeren Oberfläche von dem Haltekörper (101) zu verursachen.

3. Der Dentalapparat (100) gemäß Anspruch 1 oder 2,
wobei der Beschleunigungssensor (105) geeignet ist zum Messen des Steuersignals, welches induktiv ist für zumindest zwei und/ oder zumindest drei Komponenten von Beschleunigung von dem Haltekörper (101).

4. Der Dentalapparat (100) gemäß einem der Ansprüche 1 bis 3,
wobei der Beschleunigungssensor (105) geeignet ist zum Messen einer Rotationsbewegung (104) von dem Haltekörper (101).

5. Der Dentalapparat (100) gemäß einem der Ansprüche 1 bis 4, ferner aufweisend
einen Temperatursensor (108), welcher angeordnet ist innerhalb des Haltekörpers (101),
wobei der Temperatursensor (108) eingerichtet ist zum Messen einer Temperatur auf der Oberfläche von dem Haltekörper (101),
wobei die Steuereinheit (106) gekoppelt ist zu dem Temperatursensor (108) zum Empfangen eines Temperatursignals, welches indikativ ist von der Temperatur von der Oberfläche von dem Haltekörper (101), und
wobei die Steuereinheit (106) ferner gekoppelt ist zu der funktionalen Vorrichtung zum Steuern der funktionalen Vorrichtung auf der Basis von dem Temperatursignal.

6. Der Dentalapparat (100) gemäß einem der Ansprüche 1 bis 5,
wobei die funktionale Vorrichtung aufweist eine Aktivierungskomponente (103), welche angeordnet ist innerhalb des Haltekörpers (101) und eine Behandlungskomponente (102), welche eingerichtet ist für eine Behandlung im Mund eines Patienten,
wobei die Aktivierungskomponente (103) gekoppelt ist zu der Behandlungskomponente (102) zum Aktivieren der Behandlungskomponente (102).

7. Der Dentalapparat (100) gemäß einem der Ansprüche 1 bis 6, ferner aufweisend
eine Energie Versorgungseinheit (109), welche angeordnet ist zu dem Haltekörper (101),
wobei die Energie Versorgungseinheit (109) verbunden ist zu dem Sensor, zu der Steuereinheit (106) und/ oder zu der funktionalen Vorrichtung, um diese mit Energie zu versorgen.

8. Der Dentalapparat (100) gemäß Anspruch 7,
wobei die Energie Versorgungseinheit (109) ablösbar zu dem Haltekörper (101) gekoppelt ist.

9. Der Dentalapparat (100) gemäß einem der Ansprüche 1 bis 8,
wobei der Haltekörper (101) einen elektrischen Konnektor (110) aufweist zum Befestigen eines elektrischen Kabels, und
wobei der elektrische Konnektor (110) verbunden ist zu dem Sensor (105), zu der Steuereinheit (106) und/ oder zu der funktionalen Vorrichtung, um diese mit Energie zu versorgen.

10. Der Dentalapparat (100) gemäß einem der Ansprüche 1 bis 9, wobei der Haltekörper (101) einen Fluidkonnektor zum Befestigen eines Fluidkabels aufweist, und
wobei der Fluidkonnektor verbunden ist zu der funktionalen Vorrichtung zum Führen von Fluid zwischen dem Fluidkonnektor und der funktionalen Vorrichtung.

11. Der Dentalapparat (100) gemäß einem der Ansprüche 1 bis 10, wobei die funktionale Vorrichtung einen Distanzsensor aufweist zum Messen eines Distanzsignals zwischen der funktionalen Vorrichtung und einer Sektion von dem Mund.

12. Der Dentalapparat (100) gemäß Anspruch 11,
wobei die Steuereinheit (106) gekoppelt ist zu der funktionalen Vorrichtung zum Steuern der funktionalen Vorrichtung auf der Basis von dem Steuersignal und dem Distanzsignal.

13. Der Dentalapparat (100) gemäß Anspruch 11 oder 12,
wobei der Distanzsensor ein kapazitiver Sensor ist.

14. Der Dentalapparat (100) gemäß Anspruch 11 oder 12,
wobei der Distanzsensor ein optischer Sensor ist, welcher reflektierendes Licht misst, welches reflektiert wird von der Sektion des Mundes.

15. Der Dentalapparat (100) gemäß einem der Ansprüche 1 bis 14,
wobei die funktionale Vorrichtung ferner aufweist ein Beleuchtungselement zum Beleuchten der Sektion des Mundes.

## Revendications

1. Appareil dentaire (100) pour un traitement dentaire dans une bouche, l'appareil dentaire (100) comprenant
un corps de préhension (101) comprenant une surface extérieure qui est capable d'être saisie par un utilisateur,
un dispositif fonctionnel qui est adapté à un traitement dans la bouche,
un capteur d'accélération (105) qui est agencé dans le corps de préhension (101),
dans lequel le capteur d'accélération (105) est adapté pour mesurer un signal de commande généré par l'utilisateur,
dans lequel le capteur d'accélération (105) est adapté pour mesurer le signal de commande qui est indicatif d'au moins un composant d'une accélération du corps de préhension (101),
une unité de commande (106),
dans lequel l'unité de commande (106) est couplée au capteur d'accélération (105) pour recevoir le signal de commande, et
dans lequel l'unité de commande (106) est couplée en outre au dispositif fonctionnel pour commander le dispositif fonctionnel sur la base du signal de commande, et
une unité de stockage de données (107) qui est agencée dans le corps de préhension (101), dans lequel dans l'unité de stockage de données (107) une séquence de mouvement prédéfinie du corps de préhension (101) est stockée,
dans lequel la séquence de mouvement prédéfinie est indicative d'un ordre de commande pour le dispositif fonctionnel, et
dans lequel l'unité de commande (106) est adaptée pour déterminer une séquence de mouvement mesurée du corps de préhension (101) sur la base du signal de commande,
dans lequel l'unité de commande (106) est couplée à l'unité de stockage de données (107) de sorte que l'unité de commande (106) soit adaptée pour comparer la séquence de mouvement mesurée avec la séquence de mouvement prédéfinie et pour transmettre par la suite l'ordre de commande respectif indicatif de la séquence de mouvement prédéfinie.

2. Appareil dentaire (100) selon la revendication 1, dans lequel le capteur d'accélération (105) est formé sans provoquer d'irrégularité dans la surface extérieure du corps de préhension (101).

3. Appareil dentaire (100) selon la revendication 1 ou 2,
dans lequel le capteur d'accélération (105) est adapté pour mesurer le signal de commande qui est indicatif d'au moins deux et/ou d'au moins trois composants d'accélération du corps de préhension (101).

4. Appareil dentaire (100) selon l'une des revendications 1 à 3,
dans lequel le capteur d'accélération (105) est adapté pour mesurer un mouvement de rotation (104) du corps de préhension (101).

5. Appareil dentaire (100) selon l'une des revendications 1 à 4, comprenant en outre
un capteur de température (108) qui est agencé dans le corps de préhension (101),
dans lequel le capteur de température (108) est adapté pour mesurer une température sur une surface du corps de préhension (101),
dans lequel l'unité de commande (106) est couplée au capteur de température (108) pour recevoir un signal de température qui est indicatif de la température de la surface du corps de préhension (101), et
dans lequel l'unité de commande (106) est couplée en outre au dispositif fonctionnel pour commander le dispositif fonctionnel sur la base du signal de température.

6. Appareil dentaire (100) selon l'une des revendications 1 à 5,
dans lequel le dispositif fonctionnel comprend un composant d'activation (103) agencé dans le corps de préhension (101) et un composant de traitement (102) qui est adapté à un traitement dans la bouche du patient,
dans lequel le composant d'activation (103) est couplé au composant de traitement (102) pour activer le composant de traitement (102).

7. Appareil dentaire (100) selon l'une des revendications 1 à 6, comprenant en outre
une unité d'alimentation en énergie (109) qui est agencée au corps de préhension (101), dans lequel l'unité d'alimentation en énergie (109) est reliée au capteur, à l'unité de commande (106) et/ou au dispositif fonctionnel pour fournir de l'énergie.

8. Appareil dentaire (100) selon la revendication 7,
dans lequel l'unité d'alimentation en énergie (109) est couplée de manière amovible au corps de préhension (101).

9. Appareil dentaire (100) selon l'une des revendications 1 à 8,
dans lequel le corps de préhension (101) comprend un connecteur électrique (110) pour fixer un câble électrique, et
dans lequel le connecteur électrique (110) est relié au capteur (105), à l'unité de commande (106) et/ou au dispositif fonctionnel pour fournir de l'énergie.

10. Appareil dentaire (100) selon l'une des revendications 1 à 9,
dans lequel le corps de préhension (101) comprend un connecteur de fluide pour fixer un câble de fluide, et
dans lequel le connecteur de fluide est relié au dispositif fonctionnel pour guider le fluide entre le connecteur de fluide et le dispositif fonctionnel.

11. Appareil dentaire (100) selon l'une des revendications 1 à 10,
dans lequel le dispositif fonctionnel comprend un capteur de distance pour mesurer un signal de distance entre le dispositif fonctionnel et une section de la bouche.

12. Appareil dentaire (100) selon la revendication 11,
dans lequel l'unité de commande (106) est couplée au dispositif fonctionnel pour commander le dispositif fonctionnel sur la base du signal de commande et du signal de distance.

13. Appareil dentaire (100) selon la revendication 11 ou 12,
dans lequel le capteur de distance est un capteur capacitif.

14. Appareil dentaire (100) selon la revendication 11 ou 12,
dans lequel le capteur de distance est un capteur optique qui mesure la lumière réfléchie qui est réfléchie par la section de la bouche.

15. Appareil dentaire (100) selon l'une des revendications 1 à 14,
dans lequel le dispositif fonctionnel comprend en outre un élément d'éclairage pour éclairer la section de la bouche.
